# EUROPÄISCHE PATENTSCHRIFT

(11) **EP 1 432 490 B1**
(45) Veröffentlichungstag und Bekanntmachung des Hinweises auf die Patenterteilung: **28.12.2005**
(21) Anmeldenummer: 02781219.7
(22) Anmeldetag: 04.10.2002
(51) Int. Cl.: B01D 21/26, G01N 15/02, G01N 15/04, G01N 30/00, B01L 3/00

(54) **VERFAHREN ZUR TRENNUNG VON SUSPENSIONEN UND VORRICHTUNG**
METHOD FOR THE SEPARATION OF SUSPENSIONS AND DEVICE
PROCEDE ET DISPOSITIF DE SEPARATION DE SUSPENSIONS

(30) Priorität: 05.10.2001 DE 10149316
(43) Veröffentlichungstag der Anmeldung: 30.06.2004
(73) Patentinhaber: Preventor u Tbc GmbH, 64319 Pfungstadt (DE); Albert-Ludwigs-Universität Freiburg, 79104 Freiburg (DE)
(72) Erfinder: SCHOTH, Andreas, 79291 Merdingen (DE); BLATTERT, Christoph, 79227 Schallstadt (DE); Menz, Wolfgang, 76706 Dettenheim (DE); MEYER, Stefan, 76133 Karlsruhe (DE); OERTEL, Herbert, 69120 Heidelberg (DE)
(74) Vertreter: Hörschler, Wolfram Johannes
(86) Internationale Anmeldenummer: PCT/EP2002/011187
(87) Internationale Veröffentlichungsnummer: WO 2003/031015

(56) Entgegenhaltungen:
- WO-A-00/47985
- WO-A-00/65337
- DE-A- 3 203 842
- DE-A- 19 949 551
- FR-A- 730 930
- GB-A- 499 024
- US-A- 3 346 117
- US-A- 4 292 050

## Beschreibung

Die Erfindung betrifft ein Verfahren zur Auftrennung von Suspensionen sowie eine Vorrichtung zur Durchführung dieses Verfahrens. Die Auftrennung von Suspensionen zur chemischen, physikalischen und/oder biologischen Analyse von Stoffen spielt in der analytischen Labortechnik eine wichtige Rolle. Insbesondere in der medizinischen Diagnostik ist die Trennung von Suspensionen von großer Bedeutung.

Die bisher bekannten Verfahren zur Auftrennung kleiner Mengen einer Suspension, wie sie beispielsweise in der Umwelt- und Bioanalytik benötigt werden, sind zeit- und apparateaufwendig. Für die Trennung von Partikeln und Lösungsmitteln wird oftmals die Zentrifugation angewandt. Die Trennung in Phasen unterschiedlicher Dichte erfolgt hier durch die während der Beschleunigung auf die Probe einwirkende Zentrifugalkraft. Zentrifugen sind relativ große und teure Apparate und die Probenkapazität ist limitiert.

Ein weiteres bekanntes Verfahren zur Trennung von Partikeln und Lösungsmittel stellt die Filtration dar. Die Größe der Filterporen bestimmt den Grad der Auftrennung, wobei kleine Poren eine Erhöhung des Fließwiderstandes mit sich bringen und rasch verstopfen. Auch ist das systembedingte Totvolumen relativ groß, so dass die Filtration kleiner Probenmengen mit einem vergleichsweise hohen Verlust einhergeht.

Bei der zum Beispiel in der Patentschrift DE-A-320 38 42 vorgeschlagenen Trenndüse wird durch ein oder mehrmaliges Umlaufen der Suspension in einem gekrümmten Spalt eine Trennung der einzelnen Fraktionen erreicht. Dieses Verfahren hat seine klassische Anwendung in der Kerntechnik sowie in der Reinigung von Gasen von Stäuben. Nachteil dieses Verfahrens ist jedoch, dass durch die die Düse bildenden Spaltenden eine Querströmung auftritt, die zu Strömungsstörungen führt und in Folge dessen vergleichsweise hohe Energien benötigt werden, die für biologische Materialien unerwünschte Nebenwirkungen hervorrufen können.

In einem von Roche beschriebenen Verfahren (veröffentlicht in: "Große Fortschritte durch winzige Dimensionen" in "Innovation - unser Schlüssel zum Erfolg", Roche R & D Media Day, Penzberg, 24. - 25. April 2002) findet die Abtrennung der zellulären Bestandteile nur aufgrund der Einstellung unterschiedlicher Volumenströme in den Probenzu- und Probenabführungskapillaren statt. Die unterschiedlichen Volumenströme werden durch eine entsprechende Dimensionierung der Kapillarkanäle eingestellt, als treibende Kraft für die Flüssigkeitsströme wirkt allein die Kapillarkraft. Da die Geometrie bei dem Roche-System aufgrund der Kapillarkraft von der Flüssigkeit bestimmt wird und nur geringste aufgetrennte Mengen zur Verfügung stehen, ist dieses System jedoch nicht universell und bei unterschiedlichen Anwendungen einsetzbar.

Keine der bisher bekannten Methoden kann auf einfache Weise miniaturisiert und beispielsweise in ein "on-the-Chip-Labor" auf einem Objektträger für eine "on-the-spot"-Analyse integriert werden.

Auch bei dem von Roche beschriebenen Verfahren ist eine Integration zu einem vollständigen Lab on Biochip/Chip aufgrund der geringsten Mengen mit dem Stand der Technik auf massengefertigten Polymeren nicht möglich.

Der Erfindung liegt daher die Aufgabe zugrunde, ein einfaches mikrofluidisches Verfahren und eine Vorrichtung zu schaffen, welche die Abtrennung von Feststoffen aus Flüssigkeiten sowie die Auftrennung der verschiedenen Phasen einer Suspension ermöglicht. Die Struktur sollte zusätzlich so konstruiert sein, dass sie in ein "on-the-Chip"-Anlagesystem integriert werden kann.

Diese Aufgabe wird erfindungsgemäß dadurch gelöst, dass
a) zwischen Einlassreservoir und Auslassreservoir ein äußerer Druckgradient in der Weise angelegt wird, dass die Suspension in einen radial geschlossenen gekrümmten einen Krümmerbogen bildenden Mikrokanal strömt,
b) mindestens eine Fraktion direkt nach dem Krümmerbogen durch eine Absaugöffnung über einen Absaugkanal abgeführt wird.

In Bereich des Krümmerbogens wird aufgrund der zusätzlich wirkenden Zentrifugalkraft die laminare Strömung transversal von einer Sekundärströmung überlagert, wodurch die Fraktion mit der höheren spezifischen Dichte zur Krümmeraußenseite hin beschleunigt wird, während sich die Fraktion mit der niedrigeren spezifischen Dichte zur Krümmerinnenseite hin bewegt. Es kommt somit schon vor der eigentlichen Kanalverzweigung zu einer Auftrennung der Fraktionen.

Die Einstellung unterschiedlicher Volumenströme in den Zu- und Abführkanälen des Mikrokanalsystems erfolgt einerseits durch die unterschiedliche Dimensionierung der Zu- und Abführkanäle, andererseits durch die Wahl des äußeren Druckgradienten. Die Strömung der Suspension in dem Mikrokanalsystem kann auch durch ein elektrisches oder thermisches Potential bewirkt werden. Erst das äußere Potential erlaubt die effektive Nutzung der Zentrifugalkraft, da die Kraft bei einem rein kapillar angetriebenen Volumenstrom zu gering ist.

Durch eine serielle Anordnung von Krümmerbogenstrukturen kann eine Konzentration der Phase mit niedrigerer Dichte in der Weise erfolgen, dass nach einer ersten Separation der flüssigen Phase der Absaugkanal zum Einlaufkanal für einen nachfolgenden Krümmerbogen wird, wobei die angereicherte Phase über den Krümmerbogen sukzessive weiter separiert wird.

Das Prinzip der seriellen Anordnung von Krümmerbogenstrukturen ist auch dazu geeignet, die verschiedenen Phasen einer Suspension weiter aufzutrennen bzw. zu konzentrieren. Die Fraktionen in den Auslaßreservoirs können einem Analyseverfahren oder anderen Verfahren zugeführt werden.

Die Vorrichtung zur Durchführung des oben beschriebenen Verfahrens einschließlich seiner Varianten ist erfindungsgemäß gekennzeichnet durch ein Einlaßreservoir und mindestens zwei Auslaßreservoire, die über eine Einlaufstrecke, einen Krümmerbogen aus Mikrokanälen und zwei in einem Winkel von ≤ 90° angeordneten Mikrokanälen verbunden sind. Der Krümmerbogen besitzt einen Winkel ≥ 45°. Je größer der Winkel ist, desto länger wirkt die Zentrifugalkraft auf die Suspension ein. Die Trenneffizienz wird damit höher.

Der Krümmerbogen kann in allen drei Raumrichtungen verlaufen. Aus geometrischen Gründen ist bei einer Kanalanordnung in zwei Dimensionen der Bogenwinkel bei einem gleichbleibenden Bogenradius ≤ 360°. Bogenwinkel > 360° lassen sich dann nur durch eine spiralförmige Kanalanordnung mit kleiner werdendem Bogenradius realisieren. Der Nachteil einer solchen Anordnung ist aber ein großer lateraler Platzbedarf. Der Vorteil der Nutzung der dritten Dimension liegt in der Realisierbarkeit von Bogenwinkeln > 360° bei gleichbleibendem Bogenradius. Ein weiterer Vorteil einer solchen Anordnung ist das einfache zusätzliche Anbringen von Absaugkanälen an einer schraubenförmigen Kanalstruktur.

N Auslaßreservoire sind durch (N-1) Krümmerbögen verbunden.

Der Mikrokrümmer kann aus Metall, Glas, Silizium oder einem natürlichen oder künstlichen Polymer hergestellt werden. Die Vorrichtung ist in ein mikrofluidisches Analysensystem zur Analyse der verschiedenen Fraktionen der Suspension integriert.

Das erfindungsgemäße Verfahren und die Vorrichtung haben gegenüber dem Stand der Technik den Vorteil, dass aufgrund der sehr geringen Abmessungen der Kanäle die Auftrennung der Suspension auf den Mikrochip erfolgen kann und nur relativ kleine Stoffvolumina im Bereich von Picolitern bis Mikrolitern benötigt werden.

Gegenüber dem im Stand der Technik beschriebenen Verfahren ist das erfindungsgemäße System steuerbar und kann unabhängig von der Flüssigkeitsmenge ausgelegt werden. Daher ist bei dem erfindungsgemäßen System die Reproduzierbarkeit gewährleistet. Im Vergleich zu dem im Stand der Technik beschriebenen Verfahren ist ferner bei dem erfindungsgemäßen System die Trenneffizienz höher und unabhängig von den fluidischen Eigenschaften (bei dem erfindungsgemäßen System sind nur Masse- und Dichteunterschiede ausschlaggebend). Daher können bei dem erfindungsgemäßen System typische Schwankungen in der Suspensionszusammensetzung und Suspensionsfluidik über Druckgradienten ausgeglichen werden, was bei dem im Stand der Technik beschriebenen System nicht möglich ist. Da außerdem die Geometrie bei dem im Stand der Technik beschriebenen System aufgrund der Kapillarkraft von der Flüssigkeit bestimmt wird und nur geringste aufgetrennte Mengen zur Verfügung stehen, ist das erfindungsgemäße System universeller und damit bei unterschiedlichen Anwendungen einsetzbar.

### Zeichnungen

Anhand der Zeichnungen wird die Erfindung nachstehend eingehender beschrieben. Es zeigt:
- Figur 1: ein erstes Ausführungsbeispiel der erfindungsgemäßen Vorrichtung zur Abtrennung einer schweren Phase von einer Flüssigkeit,
- Figur 2: ein zweites Ausführungsbeispiel der erfindungsgemäßen Vorrichtung, bei der die serielle Auftrennung der schwereren Phase in einer Konzentration der leichten Phase resultiert,
- Figur 3: ein drittes Ausführungsbeispiel der erfindungsgemäßen Vorrichtung, bei der die serielle Auftrennung der Phasen unterschiedlicher Dichte erreicht wird, und
- Figur 4: die erfindungsgemäße Vorrichtung integriert in ein Mikrochiplabor.

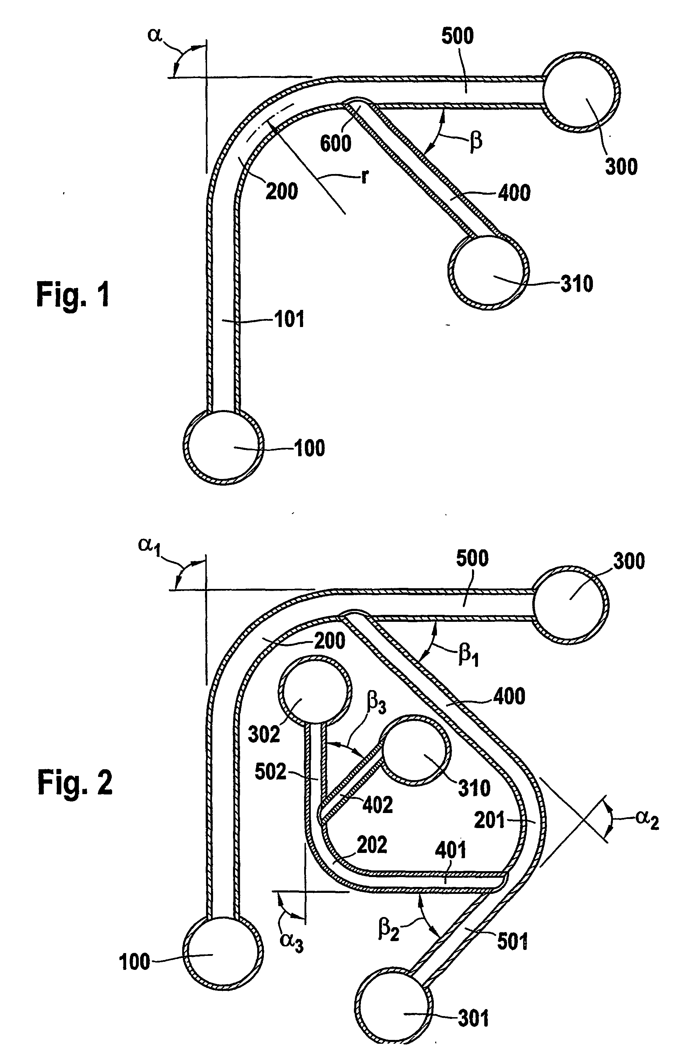

Figur 1 zeigt ein erstes Ausführungsbeispiel der erfindungsgemäßen Vorrichtung zur Abtrennung einer schweren Phase von einer Flüssigkeit. Die erfmdungsgernäße Struktur umfasst ein Einlassreservoir 100, eine Einlaufstrecke 101, zwei Auslassreservoirs 300, 310, den Absaugkanal 400, den Restkanal 500 und den Krümmerbogen 200. Der Krümmerbogen 200, der dreidimensional in allen drei Raumebenen verlaufen kann, ist durch den Bogenwinkel α und den Bogenradius r definiert.

Die mikrofluidische Struktur wird über das Einlassreservoir 100 mit Suspension befüllt. Zwischen Einlassreservoir 100 und den Auslassreservoirs 300 und 310 wird ein Druckgradient so angelegt, dass die Suspension in den Mikrokanal strömt. Nach Passage einer Einlaufstrecke 101 bildet sich im Mikrokanal aus der anfänglich gleichmäßigen eine parabolische Geschwindigkeitsverteilung. Zum einen wirkt hier die Wandreibungskrafl, die proportional zu dem am Mikrokanal anliegenden Druckgradienten ist, auf die Partikel einer Suspension. Dies führt zur Ausbildung einer laminaren Strömung in dem Mikrokanal 101. Die Randströmung wird verzögert und die Kernströmung wegen der Kontinuitätsbedingung beschleunigt; es bildet sich das laminare Strömungsprofil voll aus. Ein Merkmal der laminaren Strömung ist die parabolische Geschwindigkeitsverteilung über den Kanalquerschnitt. Im Zentrum herrscht die größte Geschwindigkeit, in den Randbereichen die kleinste. Mit den Scherraten verhält es sich genau umgekehrt.

Die Suspension strömt anschließend durch den Krümmerbogen 200 im Mikrokanal. Zusätzlich wirkt nun die Zentrifugalkraft im Bereich des Krümmerbogens 200 im Mikrokanal, die zur Bildung einer Sekundärströmung führt. Diese wird der laminaren Hauptströmung transversal überlagert.

Das in Wandnähe strömende Fluid besitzt aufgrund der Wandreibung eine geringere Geschwindigkeit als das im Kanalzentrum strömende Fluid. Dadurch ist die Zentrifugalkraft im Zentrum des Kanals größer als in den Randbereichen und das Fluid strömt aus dem Zentrum nach außen. Aus Gründen der Volumenerhaltung sowie des sich bildenden Druckgradienten muss das Fluid aus den Randbereichen des Kanals nach innen zurückströmen und es bildet sich ein Doppelwirbel aus, welcher der Hauptströmung überlagert ist.

Die Hauptströmung mit der überlagerten Sekundärströmung generiert im Mikrokanal Bereiche unterschiedlicher Strömungsverhältnisse. Die Bereiche mit hohen Geschwindigkeiten und damit niedrigen Scherraten entstehen im Mikrokanal im Bereich des Krummersbogens 200 im Zentrum mit einer Verschiebung in radialer Richtung.

Die Phasen größerer Dichte oder die Partikel der Suspension sammeln sich bevorzugt in den Regionen mit hohen Geschwindigkeiten und niedrigen Scherraten. Für den Mikrokrümmer bedeutet dies, dass sich aufgrund der Strömungsverhältnisse die Phasen großer Dichte direkt nach dem Krümmerbogen 200 im distalen Bereich des Mikrokanals befinden, die Phasen kleinerer Dichte dagegen im proximalen Bereich konzentriert werden. Die Phase kleiner Dichte kann direkt nach dem Krümmerbogen 200 durch eine Absaugöffnung 600 über einen Absaugkanal 400 entfernt werden.

Die Strömung der Suspension in dem Mikrokanalsystem wird durch ein physikalisches Potential bewirkt. Das physikalische Potential kann ein elektrisches, thermisches oder hydraulisches Potential sein. Das elektrische Potential wird durch das Anlegen unterschiedlicher elektrischer Spannungen an den Zu- und Abflusskanälen erzeugt. Damit können insbesondere elektrisch leitende Suspensionen durch das Mikrokanalsystem bewegt werden. Ein thermisches Potential wird durch das Aufheizen oder Abkühlen von Bereichen der Zu- und Abflusskanäle erzeugt. Dieses führt zu einer Dichteänderung der Suspension und durch das Ausdehnen beziehungsweise Schrumpfen zu einer Bewegung der Suspension im Mikrokanalsystem. Die zur Bewegung der Suspension erforderliche hydraulische Potentialdifferenz wird mittels Beaufschlagung mit einem Druckmedium, vorzugsweise einem geeigneten Gasmedium wie beispielsweise Inertgas oder Edelgas, bewerkstelligt.

Die Wahl des jeweiligen Mediums zur Bereitstellung eines Potentials bzw. einer Kraft zur Bewegung der Suspension durch die Mikrokrümmerstruktur und die Kanäle des möglicherweise angeschlossenen Mikrochips richtet sich dabei insbesondere nach den der Suspensionen und der jeweiligen Bestandteile inhärenten physikalischen Eigenschaften.

Die vorgeschlagene Struktur ermöglicht eine einfache Ausformung der Trennelemente ohne bewegliche oder aktive fluidische Komponenten wie Pumpen oder Ventile. Weiterhin kann der Mikrokrümmer kostengünstig und mit variabler Geometrie in einer Vielzahl von Materialien gefertigt werden, wie sie in der Mikrosystemtechnik vorkommen, beispielsweise natürliche und künstliche Polymere, Metalle, Glas, Quarz oder Silizium. Als Herstellungsverfahren bieten sich, ohne eine Einschränkung vornehmen zu wollen, Ätzen und Fräsen sowie insbesondere Spritzgießverfahren an.

Direkt nach dem Krümmerbogen 200 verzweigt sich der Mikrokanal in zwei Kanäle, den Absaugkanal 400 und den Restkanal 500. Der Absaugkanal 400 ist auf der bezüglich des Krümmerbogens 200 proximalen Seite mit dem Krümmerbogen 200 durch die Absaugöffnung 600 verbunden. Der Absaugkanal 400 ist in einem bestimmten Winkel β eingerichtet und mündet in das Auslassreservoir 310. Der Restkanal 500 mündet in das Auslassreservoir 300. Die Weite der Kanäle 400 und 500 kann dabei die gleiche wie die des Mikrokanals sein, oder geringer. Auch müssen die Kanäle 400 und 500 nicht den gleichen Durchmesser aufweisen. Die genaue Dimensionierung richtet sich dabei nach den aufzutrennenden Fraktionen und den Anteilen der Fraktionen an der Ausgangssuspension. Die Suspension wird durch die Strömungsverhältnisse im Mikrokrümmer nach Passage des Krümmerbogens 200 in zwei Phasen separiert. Die Phase mit der kleineren Dichte wird durch die Absaugöffnung 600 und den Absaugkanal 400 in das Auslassreservoir 310 geleitet und kann dort entnommen werden. Der restliche Anteil der Suspension fließt über den Restkanal 500 in das Auslassreservoir 300.

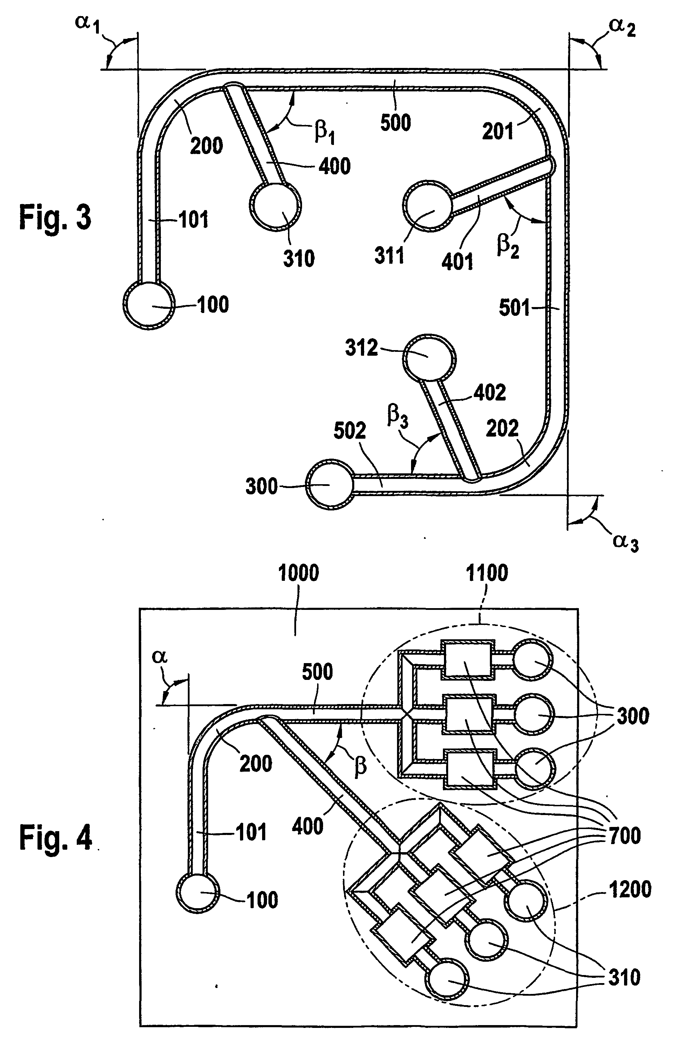

In den Figuren 2 und 3 sind serielle Anordnungen von Krünunerbogenstrukturen beschrieben, die dazu dienen, eine Phase zu konzentrieren bzw. die Suspension in mehrere Phasen aufzutrennen. Die Winkel α der Krümmerbogen, die Winkel β der Absaugkanäle sowie die Länge der Einlautkanäle kann dabei gleich sein oder sich ändern. Ebenso kann der Durchmesser der Kanäle konstant bleiben oder sich ändern, insbesondere kleiner werden.

Die in Figur 2 wiedergegebene Anordnung stellt beispielhaft ein bevorzugtes Ausführungsbeispiel für die Konzentration der Phase mit niedriger Dichte dar. Die Suspension wird am Einlaßreservoir 100 in die mikrofluidische Struktur eingeleitet. Am Krümmerbogen 200 findet eine erste Separation der flüssigen Phase statt. Der Absaugkanal 400 wird nun zum Einlaufkanal für den folgenden Krümmerbogen 201. Sukzessive wird diese angereicherte Phase über die Krümmerbögen 201 und 202 weiter separiert und liegt schließlich am Auslaßreservoir 310 in einer höheren Konzentration als der Ausgangskonzentration in der Suspension vor. Die Fraktionen in den Auslaßreservoirs 300, 301 und 302 können genauso wie die in Auslaßreservoir 310 gesammelte Fraktion Analyseverfahren oder anderen Verfahren zugeführt werden.

In Figur 3 ist beispielshaft eine bevorzugte Anordnung der Mikrokrümmerstrukturen wiedergegeben, die dazu dient, verschiedene Phasen einer hochkomplexen mehrphasigen Suspension aufzutrennen. Die Phase mit der geringsten Dichte wird nach dem Krümmerbogen 200 separiert und kann im Auslaßreservoir 310 entnommen werden. Sukzessive können über die folgenden Krümmerbögen 201, 202 weitere Phasen mit ansteigender Dichte separiert und über die Auslaßreservoire 311, 312 und 300 entnommen werden.

Prinzipiell ist eine weitere Kaskadierung der Krümmerbogenstrukturen sowie eine Kombination der in den beiden beschriebenen Ausführungsbeispielen gezeigten Anordnungen möglich.

Die geometrische Form der Vorrichtung, das heißt, die Länge, Breite, Tiefe und die Querschnittsform des Mikrokanals, die Bogenradien r_{1-N}, die Bogenwinkel α_{1-N} sowie die Winkel β_{1-N} der Absaugkanäle hängen von den physikalischen Eigenschaften der aufzutrennenden Medien ab.

Die beschriebene Vorrichtung kann in ein Mikrochip-Labor, wie es beispielsweise in der deutschen Patentanmeldeschrift DE-A-199 49 551 A1 oder der US-Patentschrift US-A-5,858,195 beschrieben ist, integriert werden. Dies ist schematisch in Fig. 4 wiedergegeben. Eine oder mehrere der durch den Mikrokrümmer separierten Phasen können der gleichen oder unterschiedlichen Analyseverfahren, beispielsweise physikalischen, chemischen, toxikologischen, pharmakologischen oder biochemisch/biologischen Analysen, unterzogen werden. Auf diese Weise können komplexe Stoffgemische, beispielsweise biologische Flüssigkeiten wie Blut, Urin oder Lymphe, oder Oberflächen- oder Sickerwässer analysiert werden.

### Bezugszeichenliste

- 100: Einlassreservoir
- 101: Einlaufstrecke/Mikrokanal
- 200: Krümmerbogen
- 201: Krümmerbogen
- 202: Krümmerbogen
- 300: Auslassreservoir
- 301: Auslassreservoir
- 302: Auslassreservoir
- 310: Auslassreservoir
- 311: Auslassreservoir
- 312: Auslassreservoir
- 400: Absaugkanal
- 401: Absaugkanal
- 402: Absaugkanal
- 450: Verteilerkanal
- 500: Restkanal
- 550: Verteilerkanal
- 600: Absaugöffnung
- 700: Analysekammern
- 1100: Analyseregion
- 1200: Analyseregion

- r: Bogenradius
- α: Winkel der Krümmerbögen
- β: Winkel der Absaugkanäle

## Patentansprüche

1. Verfahren zur Trennung von Suspensionen, bei dem die aufgespaltenen Fraktionen über ein Mikrokanalsystem einem oder mehreren Analysenbereichen zugeführt werden, **dadurch gekennzeichnet dass** a) zwischen Einlassreservoir und Auslassreservoir ein äußerer Druckgradient in der Weise angelegt wird, dass die Suspension in einen radial geschlossenen gekrümmten einen Krümmerbogen bildenden Mikrokanal strömt,
b) mindestens eine Fraktion direkt nach dem Krümmerbogen durch eine Absaugöffnung über einen Absaugkanal abgeführt wird.

2. Verfahren nach Anspruch 1, **dadurch gekennzeichnet, dass** die Einstellung unterschiedlicher Volumenströme in den Zu- und Abführkanälen des Mikrokanalsystems durch die Wahl des äußeren Druckgradienten erfolgt.

3. Verfahren nach Anspruch 1, **dadurch gekennzeichnet, dass** die Strömung der Suspension in dem Mikrokanalsystem durch ein physikalisches Potential bewirkt wird.

4. Verfahren nach Anspruch 3, **dadurch gekennzeichnet, dass** das physikalische Potential ein hydraulisches Potential ist.

5. Verfahren nach Anspruch 3, **dadurch gekennzeichnet, dass** das physikalische Potential ein elektrisches Potential ist.

6. Verfahren nach Anspruch 3, **dadurch gekennzeichnet, dass** das physikalische Potential ein thermisches Potential ist.

7. Verfahren nach Anspruch 1, **dadurch gekennzeichnet, dass** durch eine serielle Anordnung von Krümmerbogenstrukturen eine Konzentration der Phase mit niedrigerer Dichte in der Weise erfolgt, dass nach einer ersten Separation der flüssigen Phase der Absaugkanal zum Einlaufkanal für einen nachfolgenden Krümmerbogen wird, wobei die angereicherte Phase über den Krümmerbogen sukzessiv weiter separiert wird.

8. Verfahren nach Anspruch 1, **dadurch gekennzeichnet, dass** durch eine serielle Anordnung von Krümmerbogenstrukturen die verschiedenen Phasen einer Suspension weiter aufgetrennt bzw. konzentriert werden.

9. Verfahren nach Anspruch 1, **dadurch gekennzeichnet, dass** die Fraktionen in den Auslassreservoirs einem Analysenverfahren oder anderen Verfahren zugeführt werden.

10. Vorrichtung zur Durchführung des Verfahrens nach Anspruch 1 bis 9, **dadurch gekennzeichnet, dass** ein Einlassreservoir (100) und mindestens zwei Auslassreservoire (300, 310) über eine Einlaufstrecke (101), einen Krümmerbogen (200) aus Mikrokanälen und zwei in einem Winkel von β ≤ 90° angeordnete Mikrokanäle (400, 500) verbunden sind.

11. Vorrichtung nach Anspruch 10, **dadurch gekennzeichnet, dass** der Bogenwinkel α im Bereich ≥ 45° ist.

12. Vorrichtung nach Anspruch 10, **dadurch gekennzeichnet, dass** n Auslassreservoire durch (n - 1) Krümmerbögen verbunden sind.

13. Vorrichtung nach Anspruch 10, **dadurch gekennzeichnet, dass** der Krümmerbogen (200) aus Metall, Glas, Silizium oder einem natürlichen oder künstlichen Polymer hergestellt wird.

14. Vorrichtung nach Anspruch 10, **dadurch gekennzeichnet, dass** diese in ein mikrofluides Analysensystem (analytisches Mikrosystem) zur Analyse der verschiedenen Fraktionen der Suspension integriert ist.

## Claims

1. Method of separating suspensions, in which the split fractions are fed via a microchannel system to one or more analysis areas, **characterized in that** a) an external pressure gradient is applied between inlet reservoir and outlet reservoir in such a way that the suspension flows in a radially closed, curved microchannel which forms an elbow bend, b) at least one fraction is discharged immediately after the elbow bend through an extraction opening via an extraction channel.

2. Method according to Claim 1, **characterized in that** different volume flows are set in the feed and discharge channels of the microchannel system by virtue of the choice of external pressure gradient.

3. Method according to Claim 1, **characterized in that** the flow of the suspension in the microchannel system is brought about by a physical potential.

4. Method according to Claim 3, **characterized in that** the physical potential is a hydraulic potential.

5. Method according to Claim 3, **characterized in that** the physical potential is an electrical potential.

6. Method according to Claim 3, **characterized in that** the physical potential is a thermal potential.

7. Method according to Claim 1, **characterized in that**, by virtue of a serial arrangement of elbow bend structures, the phase with the lower density is concentrated in such a way that, following a first separation of the liquid phase, the extraction channel becomes the inlet channel for a subsequent elbow bend, wherein the enriched phase is then separated further via the elbow bend.

8. Method according to Claim 1, **characterized in that**, by virtue of a serial arrangement of elbow bend structures, the various phases of a suspension are further separated or concentrated.

9. Method according to Claim 1, **characterized in that** the fractions in the outlet reservoir are fed to an analysis process or to some other process.

10. Apparatus for carrying out the method according to Claims 1 to 9, **characterized in that** an inlet reservoir (100) and at least two outlet reservoirs (300, 310) are connected via an inlet path (101), an elbow bend (200) consisting of microchannels, and two microchannels (400, 500) arranged at an angle of β ≤ 90°.

11. Apparatus according to Claim 10, **characterized in that** the bend angle α is in the range of ≥ 45°.

12. Apparatus according to Claim 10, **characterized in that** n outlet reservoirs are connected by (n-1) elbow bends.

13. Apparatus according to Claim 10, **characterized in that** the elbow bend (200) is made of metal, glass, silicon or another natural or artificial polymer.

14. Apparatus according to Claim 10, **characterized in that** said apparatus is integrated in a microfluidic analysis system (analytical microsystem) for analysing the various fractions of the suspension.

## Revendications

1. Procédé de séparation de suspensions dans lequel les fractions clivées sont conduites vers une ou plusieurs zones d'analyse par un système de micro-canaux, **caractérisé en ce que** :
a) entre le réservoir d'arrivée et le réservoir d'évacuation, il est appliqué un gradient de pression extérieure tel que la suspension coule dans un micro-canal fermé côté radial, recourbé et formant un coude,
b) au moins une fraction est évacuée directement après le coude par une ouverture d'aspiration par l'intermédiaire d'un canal d'aspiration.

2. Procédé selon la revendication 1, **caractérisé en ce que**, pour ajuster des débits différents dans les canaux d'arrivée et d'évacuation du système de micro-canaux, on choisit le gradient de pression extérieure.

3. Procédé selon la revendication 1, **caractérisé en ce que** l'écoulement de la suspension dans le système de micro-canaux est provoqué par un potentiel physique.

4. Procédé selon la revendication 3, **caractérisé en ce que** le potentiel physique est un potentiel hydraulique.

5. Procédé selon la revendication 3, **caractérisé en ce que** le potentiel physique est un potentiel électrique.

6. Procédé selon la revendication 3, **caractérisé en ce que** le potentiel physique est un potentiel thermique.

7. Procédé selon la revendication 1, **caractérisé en ce qu'**une disposition en série de structures coudées permet de concentrer la phase à une densité plus faible de manière à ce qu'après une première séparation de la phase liquide, le canal d'aspiration se transforme en canal d'arrivée pour un coude suivant, la phase enrichie continuant à être séparée successivement par l'intermédiaire du coude.

8. Procédé selon la revendication 1, **caractérisé en ce qu'**une disposition en série de structures coudées permet de continuer à séparer, respectivement à concentrer, les différentes phases d'une suspension.

9. Procédé selon la revendication 1, **caractérisé en ce que** les fractions se trouvant dans les réservoirs d'évacuation sont conduites vers un procédé d'analyse ou d'autres procédés.

10. Dispositif pour la réalisation du procédé selon les revendications 1 à 9, **caractérisé en ce qu'**un réservoir d'arrivée (100) et au moins deux réservoirs d'évacuation (300, 310) sont reliés par l'intermédiaire d'un tronçon d'arrivée (101), d'un coude (200) de micro-canaux et de deux micro-canaux (400, 500) formant un angle β ≤ 90°.

11. Dispositif selon la revendication 10, **caractérisé en ce que** l'angle de courbure α est de l'ordre de ≥ 45°.

12. Dispositif selon la revendication 10, **caractérisé en ce que** n réservoirs d'évacuation sont reliés par (n - 1) coudes.

13. Dispositif selon la revendication 10, **caractérisé en ce que** le coude (200) est en métal, en verre, en silicium ou en polymère naturel ou artificiel.

14. Dispositif selon la revendication 10, **caractérisé en ce qu'**il est intégré dans un système d'analyse microfluide (microsystème analytique) pour l'analyse des différentes fractions de la suspension.
